# EUROPEAN PATENT APPLICATION

(11) **EP 1 946 857 A1**
(43) Date of publication of application: **23.07.2008**
(21) Application number: 06810298.7
(22) Date of filing: 20.09.2006
(51) Int. Cl.: B09B 3/00, H05B 6/74

(54) **METHOD FOR MODIFICATION OF ASBESTOS**

(30) Priority: 20.09.2005 JP 2005271929
(71) Applicant: Inter-University Research Institute National Institutes of Natural Sciences, Tokyo 181-8588 (JP); Kubota Matsushitadenko Exterior Works, Ltd., Osaka 540-6013 (JP)
(72) Inventor: SATO, Motoyasu, Toki-shi, Gifu 5095292 (JP); SANO, Yoshifumi, Kyoto-shi, Kyoto 6158245 (JP); MATSUI, Kenichi c/o Kubota Matsushitadenko Exterior Works, Ltd., Osaka-shi, Osaka 5406013 (JP); KOIZUMI, Masashi c/o Kubota Matsushitadenko Exterior Works, Ltd., Osaka-shi, Osaka 5406013 (JP); MORITA, Takashi c/o Kubota Matsushitadenko Exterior Works, Ltd., Osaka-shi, Osaka 5406013 (JP)
(74) Representative: Viering, Jentschura & Partner
(86) International application number: PCT/JP2006/318602
(87) International publication number: WO 2007/034816

(57) **Abstract**

A method for modification of asbestos is provided, which method modifies asbestos in a short period of time. This method for modification of asbestos includes a step of irradiating microwaves on an asbestos-containing object containing asbestos and a heat generating aid which is self-heated by irradiation of microwaves, thereby heating the asbestos-containing object to modify the asbestos in the asbestos-containing object.

## Description

### TECHNICAL FIELD

The present invention relates to a method for modification of asbestos, and more particularly, to a method for modification of asbestos using microwave technology.

### BACKGROUND ART

In the present application, the term "asbestos" is a collective designation for the following six kinds of mineral:
chrysotile [Mg₃Si₂O₅(OH)₄] CAS No. 12001-29-5 belonging to the serpentine family;
crocidolite [Na₂Fe₅Si₈O₂₂(OH)₂] CAS No. 12001-28-4 belonging to amphibole family;
amosite [(Mg,Fe)₇Si₈O₂₂(OH)₂] CAS No. 12172-73-5;
anthophyllite [(Mg,Fe)₇Si₈O₂₂(OH)₂] CAS No. 77536-67-5;
tremolite [Ca₂Mg₅Si₈O₂₂(OH)₂] CAS No. 77536-68-6; and
actinolite [Ca₂(Mg,Fe)₅Si₈O₂₂(OH)₂] CAS No. 77536-66-4.

Since asbestos has excellent proper-ties such as heat resistance, fire resistance, sound insulating properties, chemical resistance, abrasion resistance, electrical insulating properties, and corrosion resistance, 3,000 or more kinds of asbestos-containing products were manufactured and sold in Japan, such as construction materials, seals and thermal protection materials, friction materials, heat-insulating materials and the like. Among the above-described kinds of asbestos, crocidolite, amosite and chrysotile were used in a large number of cases. Due to the lateness of regulatory restrictions in Japan, chrysotile was used in the greatest amount.

Examples of construction materials include corrugated asbestos slate, asbestos slate for residential homes, asbestos cement boards (flexible boards, flat boards, soft boards and the like), thick extrusion-molded cement boards, asbestos cement sidings, pulp cement boards, slag gypsum cement boards, asbestos cement cylinders (chimneys), asbestos calcium silicate boards, sprayed asbestos, asbestos-containing sprayed rock wool, asbestos-containing sprayed rock wool acoustic boards, vinyl floor tiles and the like.

Examples of sealing and thermal protection materials include asbestos woven products (threads, cloth), gland packing, asbestos joint slate, spiral-shaped gaskets, asbestos boards (millboard), asbestos paper electrical insulating products and the like.

Examples of friction materials include brake linings for automobiles, clutch facings for automobiles, disc pads for automobiles, industrial molded products, specially-made woven material and the like.

Examples of heat-insulating materials include asbestos heat-insulating materials, perlite heat-insulating materials, calcium silicate heat-insulating materials, asbestos cement for water pipes and the like.

In Japan, about 90% of asbestos is used in construction materials in particular. Thus, it is predicted that over the next roughly 40 years about 40 million tons of construction waste materials will be disposed of as friable and non-friable asbestos waste products as a result of the demolition of buildings and the like. The problems of disposal site capacity are also being discussed.

On the other hand, asbestos is believed to be a cause of mesothelioma, lung cancer and the like, and this serious problem is becoming apparent in Japan and other countries. The establishment of a method for rendering asbestos waste products harmless is becoming an urgent task, including measures for preventing inhalation by workers involved in the disposal, transport and treatment of asbestos waste products and measures for preventing scattering into the surrounding environment. Construction materials, which account for the majority of asbestos waste products, contain, for example, asbestos and cement. Therefore, a method effective in rendering construction materials containing asbestos and cement harmless is required.

Conventionally, methods for rendering asbestos harmless by modification by heating the asbestos in a combustion furnace or an electric furnace have been proposed. For example, Patent Document 1 discloses a method for rendering asbestos harmless by modification using a combustion furnace. In this method, natural asbestos and a basicity regulator/binder are mixed together, and the resultant mixture is then molded. The molded mixture is subsequently fed to a high temperature furnace which is formed by carbonaceous combustible matter, whereby the mixture is heated and melts.

Further, Patent Document 2 discloses a method for rendering asbestos harmless by modification using an electric furnace. In this method, carbon powder serving as a high-temperature heat source and a raw material serving as a molten slag source are pre-charged into a melting furnace. Then, a graphite electrode in the melting furnace is turned on to produce a molten slag, and waste asbestos material is charged into this molten slag, whereby it is heated and melted.

Since asbestos has excellent heat resistance, a high temperature of about 1,200 to 1,500°C is required to render asbestos harmless by modification. Combustion furnaces which produce such a high temperature need a feeding apparatus of carbonaceous combustible matter such as coke. For that reason, the asbestos heating apparatus increases in size, and the costs for production and maintenance of the apparatus increase. Further, an electric furnace and combustion furnace require a long time after operation has started to reach the high temperatures at which modification of asbestos is possible.

Further, since asbestos has a small thermal conductivity as well as high heat resistance, a long treatment period is required to heat a lump of asbestos to its interior once the lump has been charged into the electric furnace, slag melt blast furnace or the like. Thus, the heating of asbestos by an electric furnace and melting furnace is inefficient. This is due to the fact that the heating of a substance by an electric furnace and melting furnace heats the surface of the substance from the outside, and is indirect (external) heating in which the whole substance is gradually heated by heat conduction into the interior of the substance. Especially, to heat a lump of asbestos to its interior which has been mixed and solidified, such as cement, requires an even longer treatment period.
Patent Document 1: Japanese Laid-Open Patent Publication No. 3-60789
Patent Document 2: Japanese Laid-Open Patent Publication No. 7-171536

### DISCLOSURE OF THE INVENTION

It is an objective of the present invention to provide a method for modification of asbestos which modifies asbestos in a short period of time.

According to one aspect of the present invention, a method for modification of asbestos is provided. This method comprises a step of irradiating microwaves on an asbestos-containing object containing asbestos and a heat generating aid which is self-heated by irradiation of microwaves, thereby heating the asbestos-containing object to modify the asbestos in the asbestos-containing object.

According to this method, in the asbestos-containing object, the heat generating aid is selectively heated by the irradiation of microwaves. As a result, a large temperature gradient develops between the heat generating aid and the asbestos. Due to this temperature gradient, a non-equilibrium chemical reaction occurs at the interface between the heat generating aid and the asbestos. As a result, a transformation of the crystal structure and a chemical reaction proceed which could not be attained in an equilibrium state. Then, the whole asbestos-containing object is heated in conjunction with the irradiation of microwaves, and reaches equilibrium, whereby the chemical reaction stops. As a result, the needle-shaped crystals which asbestos has are modified by the heat, and decompose, whereby the asbestos is modified.

Moreover, the microwaves can also directly heat the interior of an asbestos-containing object having a lump shape, for example. Therefore, heating by irradiation of microwaves is more suitable to substances having low heat conductivity than heating by an electric furnace and melting furnace, and an asbestos-containing object can be simultaneously heated throughout its whole. As a result, the asbestos in the asbestos-containing object can be easily heated throughout the whole asbestos-containing object, allowing the modification to be carried out in a short period of time.

Further, examples of a pre-treatment for asbestos modification include crushing the asbestos-containing object, bagging the asbestos-containing object and the like. At this stage, to prevent an operator from inhaling asbestos and to prevent asbestos from scattering into the environment, water or a chemical may be added to the asbestos-containing object. Even in such a case, the heating of the asbestos-containing object from irradiation of microwaves is not hindered by the water or chemical added to the asbestos-containing object. Thus, this method is suitable for rendering an asbestos-containing object harmless.

The heat generating aid is preferably at least one selected from the group consisting of silicon carbide, carbon, calcium oxide, iron, and iron oxide.

Silicon carbide, carbon, calcium oxide, iron and iron oxide are easily heated by irradiation of microwaves, and become hot. For example, calcium oxide is contained in cement lime and the like. Therefore, construction materials, such as a slate molded board, containing asbestos and cement, machine parts such as the apparatuses used in ships, or the asbestos in the waste products thereof can be modified in a short period of time.

According to another aspect of the present invention, provided is a method for modification of asbestos. This method comprises a step of crushing an asbestos-containing object containing asbestos and a heat generating aid which is self-heated by irradiation of microwaves, and a step of irradiating microwaves on the crushed asbestos-containing object to heat the asbestos-containing object to modify the asbestos in the asbestos-containing object.

According to this method, asbestos is modified in a short period of time by the simple treatments of, for example, crushing an asbestos-containing object and irradiating microwaves on the crushed asbestos-containing object.

### BRIEF DESCRIPTION OF THE DRAWINGS

Fig. 1 is a diagram showing an observation result through an electron microscope of a sample of Example 18;
Fig. 2 is a diagram showing an observation result through an electron microscope of a sample of Example 19;
Fig. 3 is a diagram showing an observation result through an electron microscope of a sample of Example 20;
Fig. 4 is a diagram showing an observation result through an electron microscope of a sample of Comparative Example 4;
Fig. 5 is a diagram showing an observation result through an electron microscope of a sample of Example 24 prior to irradiation of microwaves;
Fig. 6 is a diagram showing an observation result through an electron microscope of a sample of Example 24 prior to irradiation of microwaves;
Fig. 7 is a diagram showing a observation result through an electron microscope of a sample of Example 24 after irradiation of microwaves; and
Fig. 8 is a diagram showing an observation result through an electron microscope of a sample of Example 24 after irradiation of microwaves.

### BEST MODE FOR CARRYING OUT THE INVENTION

The method for modification of asbestos in an asbestos-containing object according to the present invention will now be described in more detail.

The method for modification of asbestos according to the present embodiment comprises a step of crushing an asbestos-containing object containing asbestos and a heat generating aid which is self-heated by irradiation of microwaves, and a step of irradiating microwaves on the crushed asbestos-containing object to heat the asbestos-containing object to modify the asbestos in the asbestos-containing object.

The "microwaves" according to the present application are an energy source for heating a substance, and are electromagnetic waves including ultra high frequency waves (UHF), centimeter waves (SHF), millimeter waves (EHF) and sub-millimeter waves having a frequency of from 300 MHz to 3 THz. As the microwaves, electromagnetic waves having a frequency of from 300 MHz to 30 GHz are preferred. In addition, electromagnetic waves having a frequency in the 2.45 GHz band or the 28 GHz band are especially preferred as the microwaves, due to their well-proven application in microwave furnaces and expected lower introductory costs.

The heat generating aid which is self-heated by irradiation of microwaves is a substance that absorbs microwaves well. The heat generating aid is preferably at least one selected from the group consisting of silicon carbide, carbon, calcium oxide, iron and iron oxide (e.g., magnetite (Fe₃O₄), as these substances are inexpensive in addition to absorbing microwaves well. More preferred is calcium oxide.

The heat generating aid is heated by irradiation of microwaves to thereby generate heat. However, asbestos is a substance which absorbs microwaves poorly, and asbestos does not heat up by irradiating microwaves only at the asbestos. Thus, to heat asbestos throughout the whole asbestos-containing object, the heat generating aid is preferably evenly dispersed in the asbestos-containing object. Specifically, the heat generating aid preferably is in a powder form.

The content of the heat generating aid in the asbestos-containing object is, for example, 10 to 50% by weight. The content of the heat generating aid depends on, for example, the expected heat treatment period for the asbestos-containing object, the intensity of the used microwaves, the composition of the asbestos-containing object and the kind of heat generating aid. Accordingly, the content of the heat generating aid may exceed 50% by weight.

Examples of the asbestos-containing object include the above-described asbestos-containing products, such as construction materials, seals and thermal protection materials, friction materials, heat-insulating materials and the like, as well as the waste products thereof. Examples of construction materials include mixtures of asbestos and the cement containing calcium oxide as a heat generating aid. Therefore, the method for modification of asbestos according to the present embodiment can modify asbestos such as slate molded boards and sprayed asbestos and the like as the asbestos-containing object without carrying out a pre-treatment. However, depending on the content of the calcium oxide in the construction material or the dispersed state of the calcium oxide, the heat generating aid may be added, for example, into a crushed slate molded board when the slate molded board is crushed.

The asbestos-containing object may also contain water. In such a case, like heating a food article in a microwave oven, the water in the asbestos-containing object is heated with high efficiency by the irradiation of microwaves. As a result, to prevent an operator from inhaling asbestos, and to prevent asbestos from scattering into the environment, when the asbestos-containing object is, for example, crushed or spalled, a suitable amount of water may be added to the asbestos-containing object.

The shape of the asbestos-containing object is not especially limited. The asbestos-containing object may have an irregular board shape, like that of the above-described slate molded board, a pellet shape, or an irregular lump shape which was sprayed on a spraying target.

In the step of crushing the asbestos-containing object, dry crushing or wet crushing, in which a suitable amount of water is added to the asbestos-containing object in order to prevent the asbestos from scattering, is carried out. At this stage, the asbestos-containing object is coarsely crushed to, for example, 10 mm squares. Examples of the apparatus used for crushing the asbestos-containing object include crushing apparatuses known in the art, such as jaw crushers, cutter mills, hammer mills, ball mills, and media stirring mills. These apparatuses are preferably of a closed type in order to prevent asbestos from scattering out of the apparatus.

In the step of irradiating microwaves on the asbestos-containing object, after the crushed asbestos-containing object has been introduced into the asbestos heating apparatus (microwave heating apparatus), the crushed asbestos-containing object is irradiated with microwaves. The asbestos heating apparatus has a chamber into which the asbestos-containing object is introduced and a microwave generator for irradiating microwaves into the chamber.

Since asbestos has high heat resistance, fire resistance and thermal protection properties, until now it has been thought that modification of asbestos would be difficult. Further, since asbestos is a substance absorbing microwaves poorly, it was thought that modification of asbestos from irradiation of microwaves on the asbestos would be impossible. In contrast, various ceramics, metals and minerals, for example, are substances absorbing microwaves well, and are known to generate heat through the irradiation of microwaves.

However, when a mixture of particles composes of a substance absorbing microwaves poorly (substance transparent to microwaves) and particles composed of a substance absorbing microwaves well are irradiated with microwaves, the following results are obtained. Specifically, when the above-described mixture is irradiated with microwaves, the particles composed of a substance absorbing microwaves well absorb the microwaves and are selectively heated, whereby the temperature of these particles increases. On the other hand, the temperature of the particles composed of a substance absorbing microwaves poorly hardly increases. As a result, a large temperature gradient occurs at a microscopic scale between these particles. This temperature gradient reaches several hundred degrees centigrade per 0.1 mm at the interface between the particles having a high temperature and the particles having a low temperature.

Therefore, if microwaves are irradiated on the asbestos-containing object, the heat generating aid in the asbestos-containing object is selectively heated. Further, as described above, a non-equilibrium chemical reaction occurs at the interface between the heat generating aid and the asbestos, so that a transformation of the crystal structure and a chemical reaction proceed which cannot be attained in an equilibrium state. Then, the whole asbestos-containing object is heated in conjunction with the irradiation of microwaves, and reaches equilibrium, whereby the chemical reaction stops. As a result, in the present embodiment, the needle-shaped crystals which asbestos has are modified by the heat, and decompose, whereby the asbestos is modified.

If cement particulate is contained in the asbestos-containing object, the microwaves are absorbed by the moisture in the cement particulate, whereby thermal distortion occurs. As a result, cracks and fractures in the cement particulate progress, thus promoting heating in the interior of the cement particulate.

The temperature of the asbestos-containing object in the asbestos heating apparatus is measured by, for example, a radiation thermometer. The intensity of the microwaves irradiated in the asbestos heating apparatus is suitably adjusted so that the temperature of the asbestos-containing object is controlled. Once the temperature of the asbestos-containing object has reached a suitable asbestos decomposition temperature, that temperature is maintained for a fixed period of time.

The step of crushing the asbestos-containing object may be omitted. Even in such a case, by irradiating microwaves on the asbestos-containing object to heat the asbestos-containing object, the asbestos in the asbestos-containing object can be modified.

### [Examples]

### (Example 1 and Comparative Example 1)

In Example 1, a sample was prepared in which 10 plies of a board-shaped asbestos-containing object were stacked. Then, this sample was introduced into an electric furnace having a microwave generator. The sample was irradiated with microwaves and heated by the electric furnace to 900°C. The temperature inside the sample was then measured. From the results, hardly any difference was seen between the rate of increase in temperature in the electric furnace atmosphere and the rate of increase in temperature inside the sample.

In Comparative Example 1, a sample was prepared in the same manner as in Example 1. Then, this sample was introduced into an electric furnace which did not have a microwave generator. The sample was heated only by the electric furnace to 900°C. The temperature inside the sample was then measured. From the results, a difference was seen between the rate of increase in temperature in the electric furnace atmosphere and the rate of increase in temperature inside the sample. Specifically, after the temperature in the electric furnace atmosphere had reached 900°C, it took another 50 minutes for the temperature inside the sample to reach 900°C.

From these results, it was found that the interior of an asbestos-containing object can be heated at the same time as its surface by irradiating microwaves on the asbestos-containing object.

### (Examples 2 to 9 and Comparative Example 2)

In Examples 2 to 9, slate boards formed by a wet method containing asbestos and a cement which contained calcium oxide as a heat generating aid were prepared as the samples. Then, each sample was irradiated with microwaves under the conditions shown in Table 1. Thereafter, each sample underwent qualitative analysis by dispersion staining using X-ray diffractometry and a phase contrast microscope according to the Japanese Industrial Standard JIS A1481:2006 (Methods for Measuring Asbestos Content in Building Material Products).

In Comparative Example 2, a slate board was prepared in the same manner as in Examples 2 to 9 as the sample. Then, the above-described qualitative analysis was carried out without irradiating the sample with microwaves. The measurement results of the component ratios in each sample by X-ray fluorescence analysis (XRF) and the qualitative analysis results are shown in Table 1.

In the "Microwave irradiation conditions" section in each table, "Rising temperature period (min)" shows the period of irradiation microwaves until the sample surface temperature reached the treatment temperature; the "Treatment temperature (°C)" row shows the temperature at which the sample was heat treated by microwave irradiation, and the "Retention period (min)" row shows the period during which temperature of the sample surface was retained at the treatment temperature. In the "Qualitative analysis" section, the "X-ray diffraction" section shows the qualitative analysis results by X-ray diffraction. In that section, "Present" in the "Chrysotile peak" row indicates that a chrysotile diffraction peak was found, and "Absent" indicates that a chrysotile diffraction peak was not found. Further, the substance name for the diffraction peak that was primarily observed in the X-ray diffraction pattern of each sample is shown in the "Primary peak kind". In the "Qualitative analysis" section of each table, the "Observation by phase contrast microscope (fibers/3,000 particles)" row shows the diffraction results by dispersion staining using a phase contrast microscope. The respective values in that row denote the number of fibers of asbestos observed per 3,000 particles of sample. In addition, the symbol "-" represents that analysis of the sample by dispersion staining using a phase contrast microscope was not carried out.

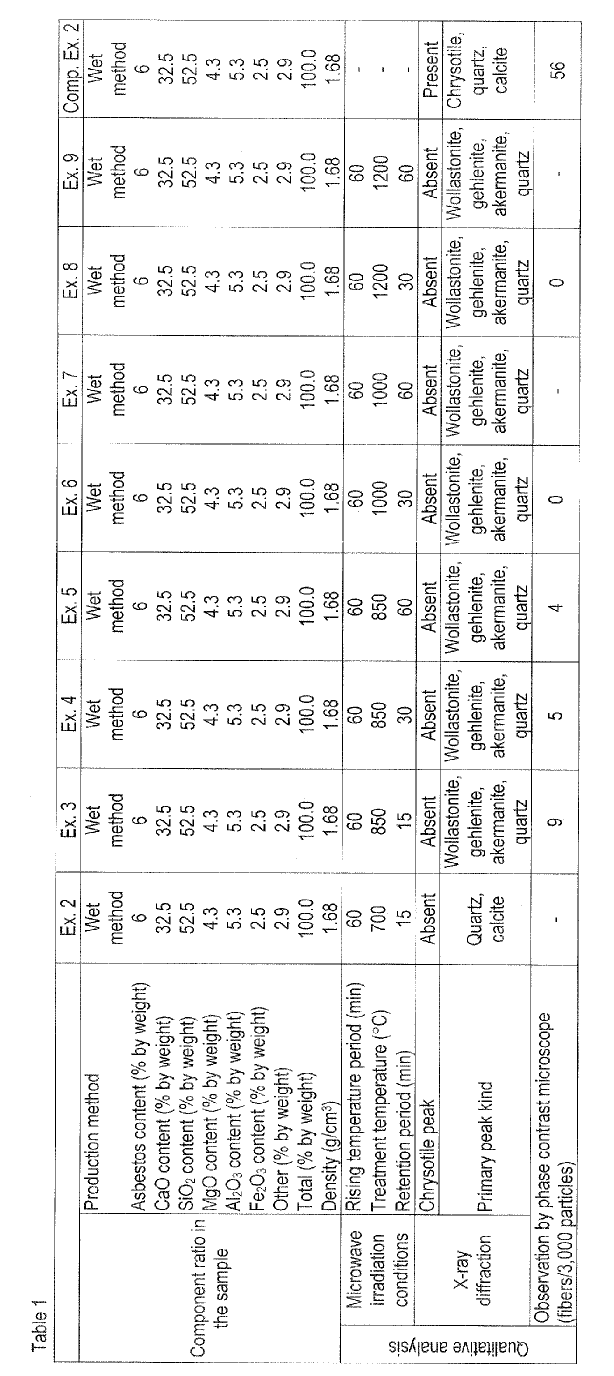

As shown in Table 1, no chrysotile peak was found in the qualitative analysis by X-ray diffraction for any of the Examples. In contrast, a chrysotile peak was found in the qualitative analysis by X-ray diffraction for Comparative Example 2, which omitted the irradiation of microwaves on the sample. Therefore, it was determined that the asbestos chrysotile was modified by the irradiation of microwaves.

Further, Examples 3 to 6 and 8 had a smaller number of asbestos fibers observed by dispersion staining using a phase contrast microscope than Comparative Example 2. Thus, from the analysis results by dispersion staining using a phase contrast microscope as well, it can be determined that the asbestos was modified by the irradiation of microwaves. Especially, in Examples 6 and 8 no asbestos fibers were found at all. Accordingly, it was found that the microwave irradiation conditions in Examples 6 and 8 were especially suitable, and that asbestos can be rendered harmless by these conditions.

### (Examples 10 to 17 and Comparative Example 3)

In Examples 10 to 17, slate boards formed by a dry method containing asbestos and a cement which contained calcium oxide were prepared as the samples. Then, the above-described qualitative analysis was carried out in the same manner as in Examples 2 to 9. In Comparative Example 3, a slate board was prepared in the same manner as in Examples 10 to 17 as the sample. Then, the above-described qualitative analysis was carried out without irradiating the sample with microwaves. The measurement results of the component ratios in each sample by X-ray fluorescence analysis and the qualitative analysis results are shown in Table 2.

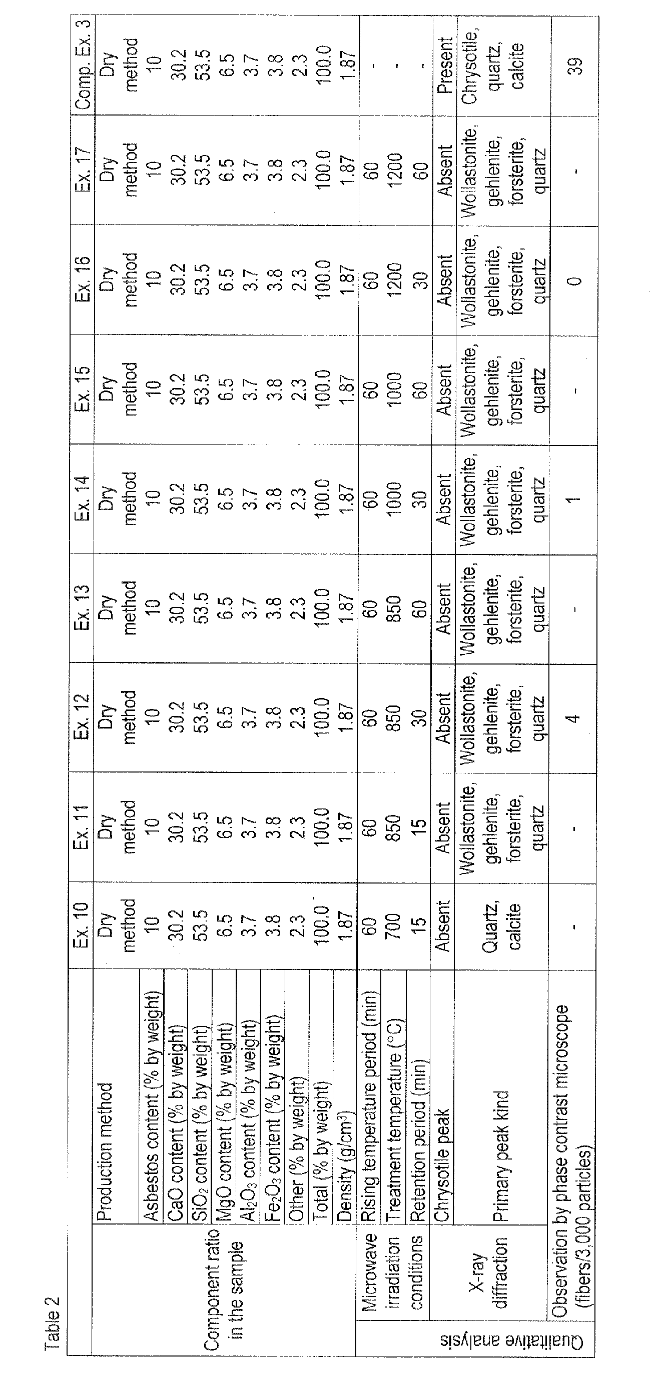

As shown in Table 2, no chrysotile peak was found in the qualitative analysis by X-ray diffraction for any of the Examples. In contrast, a chrysotile peak was found in the qualitative analysis by X-ray diffraction for Comparative Example 3, which omitted the irradiation of microwaves on the sample. Therefore, it was determined that the asbestos chrysotile was modified by the irradiation of microwaves.

Further, Examples 12, 14 and 16 had a smaller number of asbestos fibers observed by dispersion staining using a phase contrast microscope than Comparative Example 3. Thus, from the analysis results by dispersion staining using a phase contrast microscope as well, it was determined that the asbestos was modified by the irradiation of microwaves. Especially, in Example 14 hardly any asbestos fibers were found, and in Example 16 no asbestos fibers were found at all. Accordingly, it was found that the microwave irradiation conditions in Examples 14 and 16 were especially suitable for modifications of asbestos, and asbestos can be rendered harmless especially by the microwave irradiation conditions of Example 16.

### (Examples 18 to 23 and Comparative Examples 4 and 5)

In Examples 18 to 23, slate boards formed by a wet method or a dry method containing asbestos and a cement which contained calcium oxide were prepared as the samples. Then, the above-described qualitative analysis was carried out in the same manner as in Examples 2 to 9.

In Comparative Example 4, a slate board was prepared in the same manner as in Examples 18 to 20 as the sample. In Comparative Example 5, a slate board was prepared in the same manner as in Examples 21 to 23 as the sample. Then, the above-described qualitative analysis was carried out without irradiating the sample with microwaves. The measurement results of the component ratios in each sample by X-ray fluorescence analysis and the qualitative analysis results are shown in Table 3.

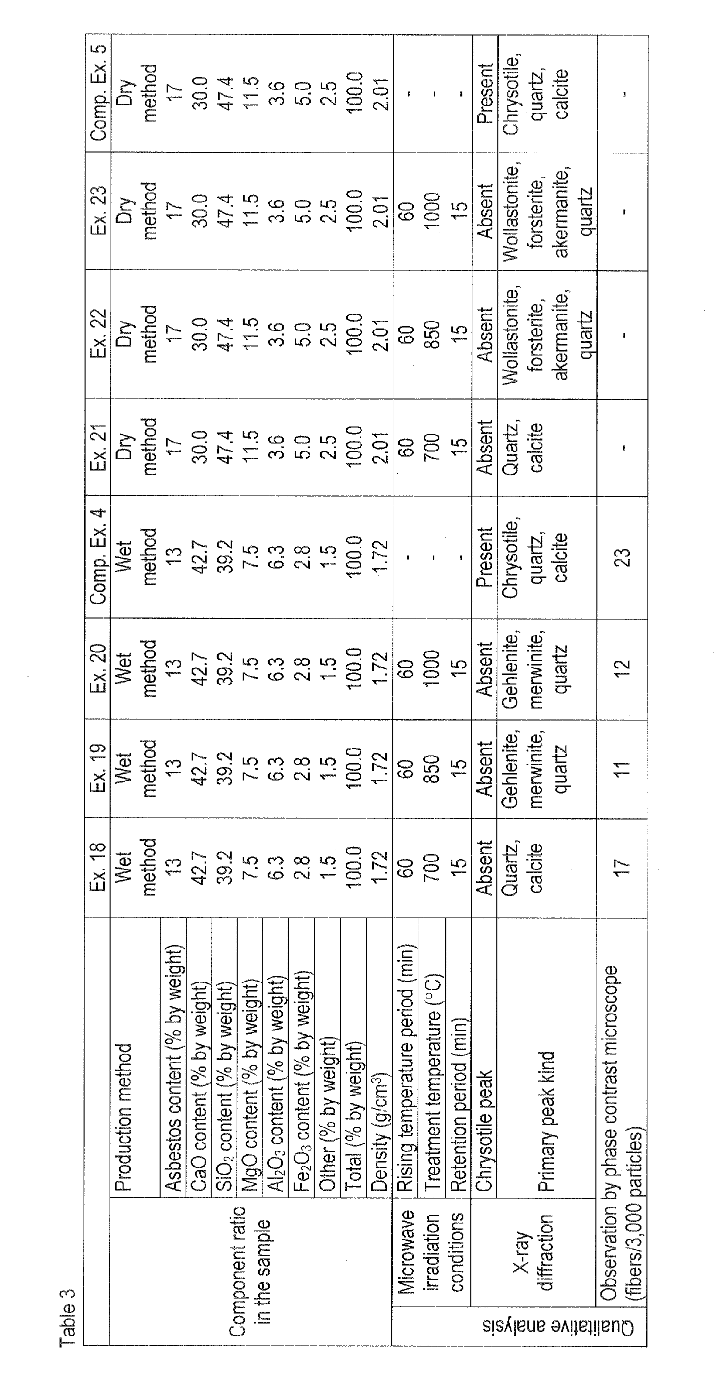

As shown in Table 3, no chrysotile peak was found in the qualitative analysis by X-ray diffraction for any of the Examples. In contrast, a chrysotile peak was found in the qualitative analysis by X-ray diffraction for both of the Comparative Examples, which omitted the irradiation of microwaves on the sample. Therefore, it was determined that the asbestos chrysotile was modified by the irradiation of microwaves.

Further, Examples 18 to 20 had a smaller number of asbestos fibers observed by dispersion staining using a phase contrast microscope than Comparative Example 4. Thus, from the analysis results by dispersion staining using a phase contrast microscope as well, it can be determined that the asbestos was modified by the irradiation of microwaves.

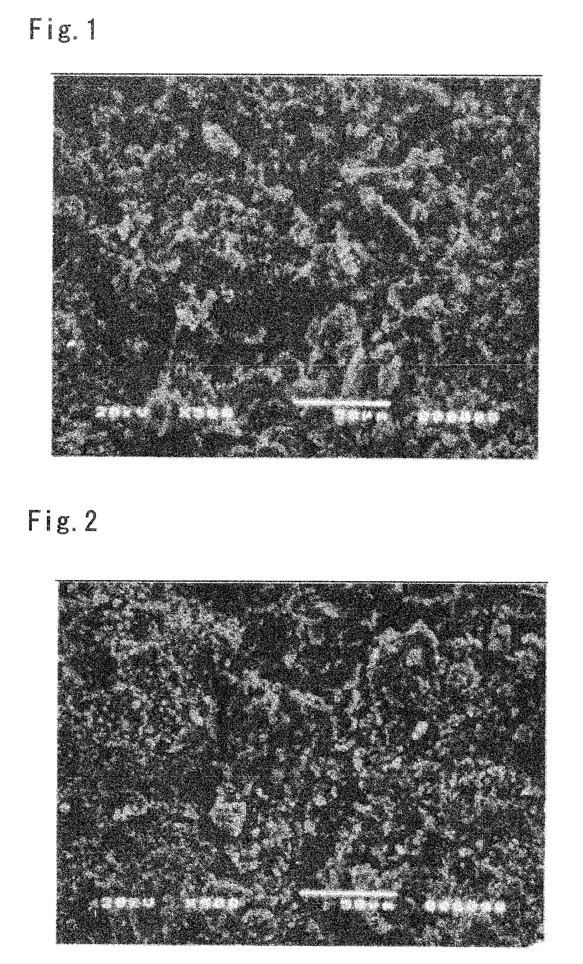

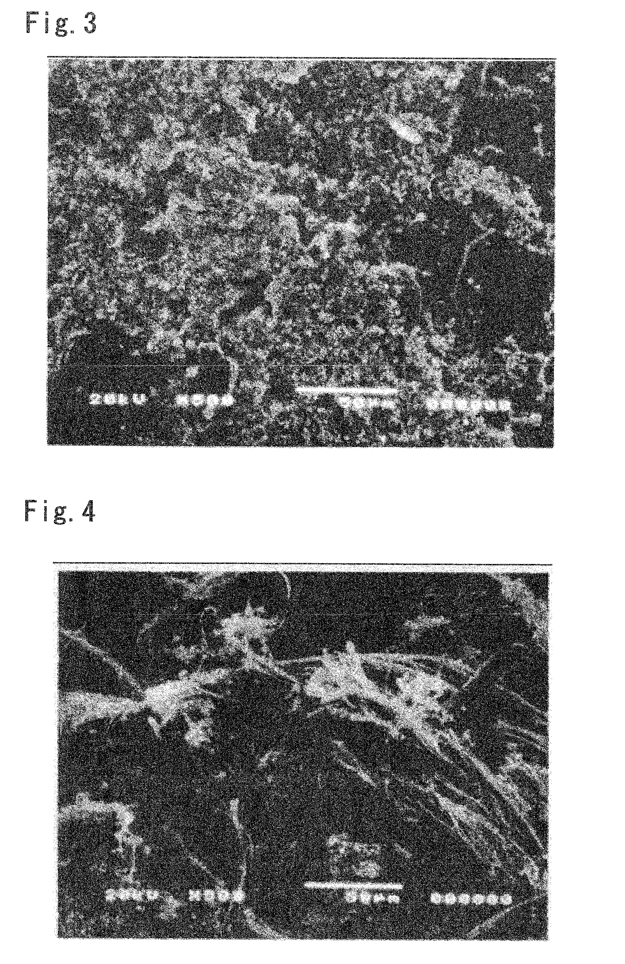

In addition to the measurement for each of the above-described items, the samples of Examples 18 to 20 and Comparative Example 4 were observed with an electron microscope. Those results are shown in Figs. 1 to 4. Fig. 1 shows the observation results of Example 18; Fig. 2 shows the observation results of Example 19; Fig. 3 shows the observation results of Example 20; and Fig. 4 shows the observation results of Comparative Example 4. Figs. 1 to 4 show the observation results at 500 times magnification.

As shown in Figs. 1 to 3, for each of the Examples, hardly any fibrous substances were observed. In contrast, as shown in Fig. 4, in Comparative Example 4, fibrous substances were observed. From these results, it was determined that the chrysotile shape changed from a fiber to a powder by the irradiation of microwaves, whereby the chrysotile was modified.

### (Example 24)

In Example 24, a sample acting as an asbestos-containing object which is sprayed on a spraying target was prepared. Specifically, the sample was prepared using 70% by weight of asbestos having the composition shown in Table 4 (manufactured by Wako Pure Chemical Industries, Ltd., the type of asbestos was chrysotile, product code No. 019-04775, CAS No. 1332-21-4) and 30% by weight of a cement having the composition shown in Table 4 (manufactured by Toyo Matelan Co., Ltd., Toyo instant cement white). The mixing ratio of the asbestos and the cement was based on the description on page 40 of "Manual for Asbestos Scattering Prevention Measures Relating to the Demolition of Buildings" published by the Japan Association for Working Environment Measurement (July 20, 2006) that the asbestos content in the main eight sprayed asbestos-containing products is 60 to 70% by weight.

Specifically, 7 g of asbestos which had been crushed until it could pass through a sieve having 0.5 mm apertures and 3 g of cement were placed in a resin vessel. Water was charged therein until it reached the 200 mL mark. Stirring and mixing were then carried out using a rotary mixer to prepare a dispersed solution. Next, the dispersed solution was dried and solidified at 115°C using an electric furnace to prepare the sample. The sample had dimensions of an 80 mm length, 50 width and 15 mm thickness. The composition ratio (in terms of oxide) of the asbestos, the cement and the sample by X-ray fluorescence analysis is shown in Table 4. The symbol "-" in each of the rows of Table 4 represents that the content of that component was below the measurement range.

**Table 4**

| | SiO₂ | MgO | CaO | Fe₂O₃ | SO₃ | Al₂O₃ | Other | Total |
|---|---|---|---|---|---|---|---|---|
| Asbestos | 51.1 | 45.0 | - | 2.7 | - | - | 1.2 | 100.0 |
| Cement | 14.7 | - | 78.4 | - | 3.1 | 3.7 | 0.1 | 100.0 |
| Sample | 40.1 | 34.2 | 20.9 | 2.6 | 1.7 | - | 0.5 | 100.0 |

| | | | | | | | | |
|---|---|---|---|---|---|---|---|---|
| Value units: % by weight | | | | | | | | |

Further, the sample underwent the above-described qualitative analysis as well as a quantitative analysis by X-ray diffraction according to the measurement method specified in the above-described JIS A:1481:2006. Then, the sample was irradiated with microwaves. After the sample had been heated over 65 minutes so that the temperature of the sample surface went from room temperature (25°C) to 1,000°C, the sample was retained for 30 minutes at a heating temperature so that the temperature of the sample surface was 1,000°C. Next, the sample was allowed to cool naturally. The temperature of the sample surface was measured using a radiation thermometer. Then, the sample which had been heated by microwaves underwent the above-described qualitative analysis and quantitative analysis. These results are shown in Table 5.

In Table 5, the "Prior to heating" column shows the results of the sample prior to being irradiated with microwaves, and the "After heating" column shows the results of the sample after being irradiated with microwaves. In the "Qualitative analysis by X-ray diffraction (Chrysotile peak)" column, "Present" indicates that a chrysotile diffraction peak was found in the qualitative analysis by X-ray diffraction, and "Absent" indicates that a chrysotile diffraction peak was not found in the qualitative analysis by X-ray diffraction. The respective values in the "Quantitative analysis by X-ray diffraction (% by weight)" row show the content of chrysotile determined in the sample. Further, while it is not shown in the table, the residue percentage during the above-described quantitative analysis by X-ray diffraction was 0.8%. The method for calculating this residue percentage is specified in the above-described JIS A:1481:2006.

**Table 5**

| | | Ex. 24 | |
|---|---|---|---|
| | | Prior to heating | After heating |
| Qualitative analysis | Qualitative analysis by X-ray diffraction (Chrysotile peak) | Present | Absent |
| | Observation by phase contrast microscope (fibers/3,000 particles) | 129 | 3 |
| Quantitative analysis | Quantitative analysis by X-ray diffraction (% by weight) | 63 | less than 0.3 |

As shown in Table 5, in the sample of Example 24, the asbestos chrysotile was found in the respective analyses and observations to have been modified by the irradiation of microwaves. The number of asbestos fibers observed by dispersion staining using a phase contrast microscope was dramatically reduced as a result of the irradiation of microwaves. Similarly, the content of chrysotile in the sample obtained by quantitative analysis by X-ray diffraction was also dramatically reduced as a result of the irradiation of microwaves. Accordingly, it was found that the microwave irradiation conditions in Example 24 are suitable for asbestos modification.

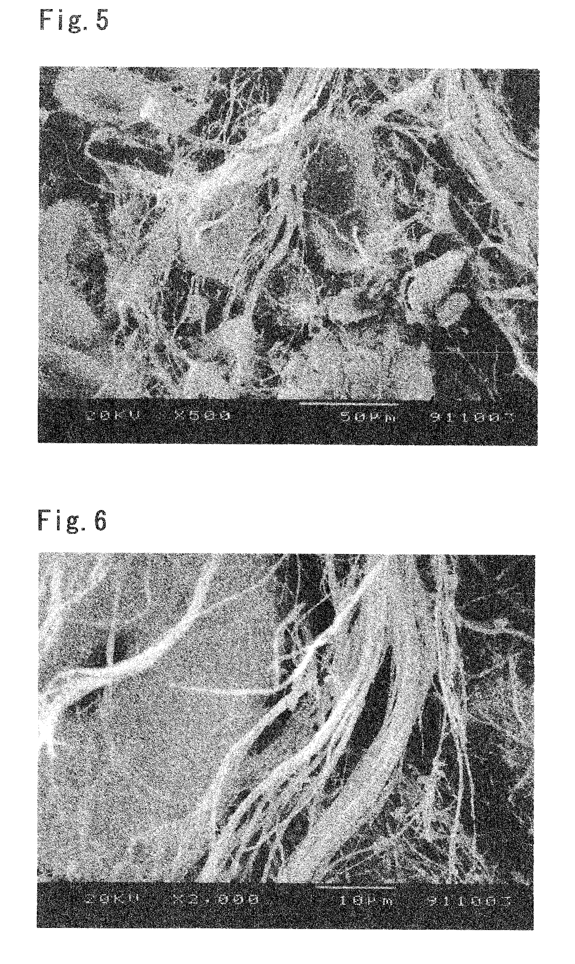

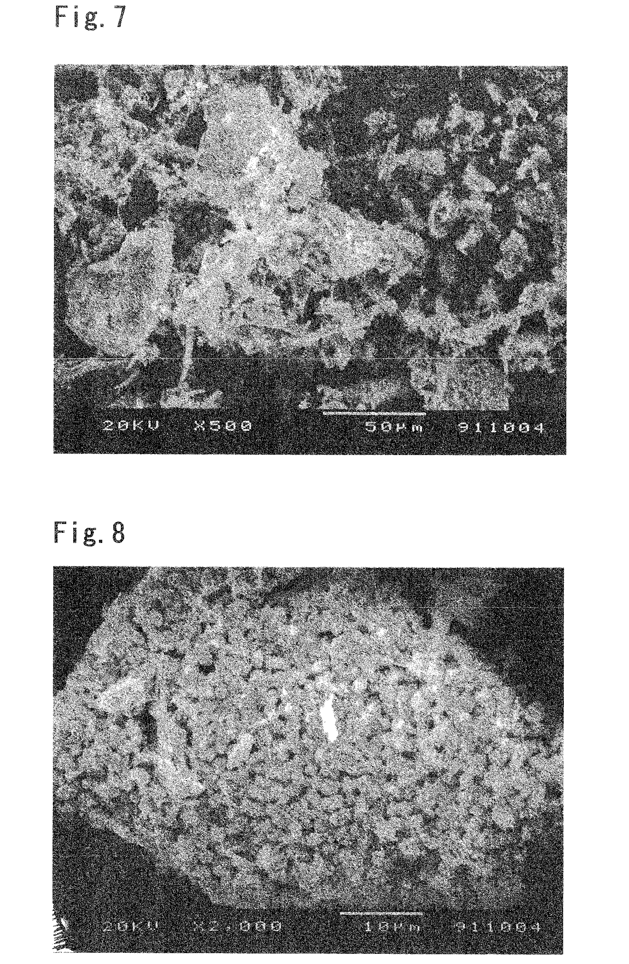

In addition to the measurement for each of the above-described items, the sample of Example 24 was observed with an electron microscope. Those results are shown in Figs. 5 to 8. Figs. 5 and 6 show the results of the sample prior to being irradiated with microwaves, and Figs. 7 and 8 show the results of the sample after being irradiated with microwaves. Figs. 5 and 7 show the observation results at 500 times magnification, and Figs. 6 and 8 show the observation results at 2,000 times magnification.

As shown in Figs. 5 to 8, in the sample of Example 24, the number of observed fibrous substances was reduced as a result of the irradiation of microwaves. From this, it was determined that the chrysotile shape changed from a fiber to a powder through the irradiation of microwaves, whereby the chrysotile was modified.

## Claims

1. A method for modification of asbestos **characterized by:**
irradiating microwaves on an asbestos-containing object containing asbestos and a heat generating aid which is self-heated by irradiation of microwaves, thereby heating the asbestos-containing object to modify the asbestos in the asbestos-containing object.

2. The method for modification of asbestos according to claim 1, **characterized in that** the heat generating aid is at least one selected from the group consisting of silicon carbide, carbon, calcium oxide, iron, and iron oxide.

3. A method for modification of asbestos **characterized by**:
crushing an asbestos-containing object containing asbestos and a heat generating aid which is self-heated by irradiation of microwaves; and
irradiating microwaves on the crushed asbestos-containing object, thereby heating the asbestos-containing object to modify the asbestos in the asbestos-containing object.
